# EUROPEAN PATENT APPLICATION

(11) **EP 4 250 843 A1**
(43) Date of publication of application: **27.09.2023**
(21) Application number: 21894051.8
(22) Date of filing: 22.11.2021
(51) Int. Cl.: H04W 72/04

(54) **TRANSMISSION PROCESSING METHOD AND APPARATUS, AND COMMUNICATION DEVICE**

(30) Priority: 23.11.2020 CN 202011323544
(71) Applicant: Vivo Mobile Communication Co., Ltd., Dongguan, Guangdong 523863 (CN)
(72) Inventor: PENG, Shuyan, Dongguan, Guangdong 523863 (CN); WANG, Huan, Dongguan, Guangdong 523863 (CN); LIU, Jinhua, Dongguan, Guangdong 523863 (CN)
(74) Representative: Lavoix
(86) International application number: PCT/CN2021/132001
(87) International publication number: WO 2022/105904

(57) **Abstract**

Disclosed in this application is a transmission processing method and apparatus, and a communication device. The method is performed by a first node, including: receiving first indication information sent by a second node or sending first indication information to a second node, where the first indication information is used for indicating a target multiplexing mode of the first node, where the second node is a donor node or a parent node of the first node.

## Description

### CROSS-REFERENCE TO RELATED APPLICATIONS

This application claims priority to Chinese Patent Application No. 202011323544.3, filed in China on November 23, 2020, which is incorporated herein by reference in its entirety.

### TECHNICAL FIELD

This application relates to the field of communications technologies, and specifically, to a transmission processing method and apparatus, and a communication device.

### BACKGROUND

In a communication system, an integrated access backhaul (Integrated Access Backhaul, IAB) node may report a multiplexing capability, and a donor node (donor node) allocates, according to the reported capability, a resource for a distributed unit (distributed unit) of the IAB node in a semi-static manner. Since the multiplexing capability of the IAB node may not be statically constant in many cases, and a dynamic capability change may exist depending on a factor such as an interference situation, a selection characteristic of a beam, or a magnitude of power. The dynamic capability change may be caused by a wireless environment change of a network, or data coordination between an upper hop and a lower hop by the IAB node. Therefore, an existing semi-static resource allocation situation is not well adapted to the dynamic capability change of the IAB node, so that reliability of multiplexing transmission of the IAB node is relatively low.

### SUMMARY

Embodiments of this application provide a transmission processing method and apparatus, and a communication device, which can resolve a problem that reliability of multiplexing transmission of an IAB node is relatively low caused by a dynamic capability change of the IAB node.

According to a first aspect, a transmission processing method is provided, performed by a first node, the method including:
receiving first indication information sent by a second node or sending first indication information to a second node, where the first indication information is used for indicating a target multiplexing mode of the first node, where
the second node is a donor node or a parent node of the first node.

According to a second aspect, a transmission processing method is provided, performed by a second node, the method including:
receiving first indication information sent by a first node or sending first indication information to a first node, where the first indication information is used for indicating a target multiplexing mode of the first node, where
the second node is a donor node or a parent node of the first node.

According to a third aspect, a transmission processing apparatus is provided, including:
a first transmission module, configured to receive first indication information sent by a second node or send first indication information to a second node, where the first indication information is used for indicating a target multiplexing mode of a first node, where
the second node is a donor node or a parent node of the first node.

According to a fourth aspect, a transmission processing apparatus is provided, including:
a second transmission module, configured to receive first indication information sent by a first node or send first indication information to a first node, where the first indication information is used for indicating a target multiplexing mode of the first node.

According to a fifth aspect, a communication device is provided, including a processor, a memory, and a program or an instruction stored in the memory and runnable on the processor, where when the program or the instruction is executed by the processor, the steps of the method according to the first aspect, or the steps of the method according to the second aspect are implemented.

According to a sixth aspect, a readable storage medium is provided, storing a program or an instruction, where when the program or the instruction is executed by a processor, the steps of the method according to the first aspect, or the steps of the method according to the second aspect are implemented.

According to a seventh aspect, a chip is provided, including a processor and a communication interface, where the communication interface is coupled to the processor, and the processor is configured to run a program or an instruction of a network device to implement the steps of the method according to the first aspect, or to implement the steps of the method according to the second aspect.

According to an eighth aspect, a computer program product is provided, stored in a non-transitory storage medium, where the computer program product is executed by at least one processor to implement the method according to the first aspect, or the method according to the second aspect.

In the embodiments of this application, the first indication information sent by the second node is received or the first indication information is sent to the second node, where the first indication information is used for indicating the target multiplexing mode of the first node; and the second node is the donor node or the parent node of the first node. In this way, because the first node or the second node may determine the target multiplexing mode of the first node, and indicate the target multiplexing mode of the first node by using the first indication information, a multiplexing mode of the first node may be dynamically adjusted by using the first indication information, which improves the reliability of multiplexing transmission. In addition, efficiency of system transmission is improved and a transmission delay is reduced.

### BRIEF DESCRIPTION OF THE DRAWINGS

FIG. 1 is a structural diagram of a network system to which the embodiments of this application are applicable;
FIG. 2 is a CU-DU structural diagram of an IAB system;
FIG. 3 is a structural diagram of another network system to which the embodiments of this application are applicable;
FIG. 4 is a flowchart of a transmission processing method according to an embodiment of this application;
FIG. 5 is a flowchart of another transmission processing method according to an embodiment of this application;
FIG. 6 is a flowchart of a transmission processing apparatus according to an embodiment of this application;
FIG. 7 is a flowchart of a transmission processing apparatus according to an embodiment of this application;
FIG. 8 is a structural diagram of a communication device according to an embodiment of this application; and
FIG. 9 is a structural diagram of another communication device according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application shall fall within the protection scope of this application.

In the specification and claims of this application, the terms "first", "second", and the like are used to distinguish similar objects, but are not used to describe a specific sequence or order. It may be understood that the data used in such a way is interchangeable in proper circumstances, so that the embodiments of this application described herein can be implemented in other sequences than the sequence illustrated or described herein, and the objects distinguished through "first" and "second" are generally of a same type and the number of the objects are not limited, for example, a first object may be one or more than one. In addition, "and/or" in this specification and the claims represents at least one of the connected objects, and a character "/" used herein indicates an "or" relationship between associated objects.

It is to be noted that the technologies described in the embodiments of this application are not limited to a long term evolution (Long Term Evolution, LTE)/LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described can be applied to the systems and radio technologies mentioned above, and can also be applied to other systems and radio technologies. However, the following exemplarily describes a new radio (New Radio, NR) system, and NR terms are used in most of the descriptions below, although these technologies can also be applied to applications other than the NR system, for example, the 6^{th} generation (6^{th} Generation, 6G) communication system.

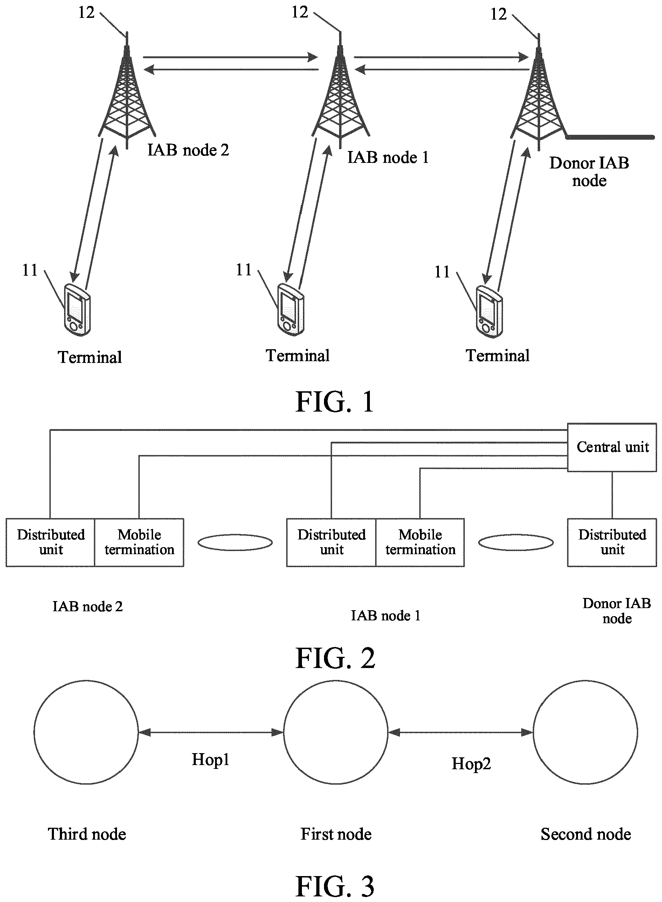

FIG. 1 shows a block diagram of a wireless communication system to which an embodiment of this application is applicable. The wireless communication system includes a terminal 11 and a network device 12. The network device may be understood as an IAB node (IAB node). The IAB node includes a DU functional section and a mobile termination (Mobile Termination, MT) functional section. Depending on an MT, an access point (that is, the IAB node) may find an upstream access point (parent IAB node), and establish a wireless connection to a DU of the upstream access point, where the wireless connection is referred to as a backhaul link (backhaul link). After one IAB node establishes a complete backhaul link, the IAB node enables a DU function of the IAB node. A DU provides a cell service, that is, the DU may provide an access service for the terminal (user equipment, UE) 11. Alternatively, the DU may provide a service for an MT of a next-hop IAB node. One self-backhauled loop includes one donor (donor) IAB node (which may also be referred to as an IAB Donor), and the donor IAB node has a wired transmission network to which the donor IAB is directly connected. It should be understood that the foregoing access point may be referred to as a node, and the foregoing upstream access point may be referred to as a parent node.

The terminal 11 may also be referred to as a terminal device or a UE, and the terminal 11 may be a terminal side device, such as a mobile phone, a tablet personal computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device) or an in-vehicle user equipment (VUE), or a pedestrian user equipment (PUE). The wearable device includes: a hand ring, a headset, a pair of glasses, or the like. It is to be noted that, a specific type of the terminal 11 is not limited in the embodiments of this application. The network-side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BBS), an extended service set (Extended Service Set, ESS), a B node, an evolved B node (eNB), a home node B, a home evolved node B, a WLAN access point, a WiFi node, a transmitting receiving point (Transmitting Receiving Point, TRP), or any suitable term in the field, provided that a same technical effect can be reached, and the base station is not limited to a specific technical term. It is to be noted that, the base station in the NR system is only used as an example in the embodiments of this application, but a specific type of the base station is not limited.

Referring to FIG. 2, FIG. 2 is a central unit (Central unit, CU)-DU structural diagram of an IAB system. In one self-backhauled loop, DUs of all IAB nodes are connected to one CU node, and the CU node configures the DUs by using an F1-AP protocol. A DU configures an MT by using a radio resource control (Radio Resource Control, RRC) protocol. A Donor IAB node does not have an MT functional section.

For ease of understanding, some content involved in the embodiments of this application are described below.

### 1. Duplexing (duplexing) mode of a DU and an MT.

A Duplexing mode between a DU and an MT of an IAB node is classified into a half duplex (Half duplex) mode and a full duplex (Full duplex) mode. In a case of the full duplex, DU/MT may be simultaneously transmitted and received, that is, one functional module receives information, and the other functional module transmits information simultaneously. Therefore, in a multiplexing mode: a frequency division multiplex (Frequency Division Multiplex, FDM) mode or a space division multiplexing (Space Division Multiplexing, SDM) mode, transmitting and receiving operation manners of the DU and MT include the following several types.

DU-transmission (DU-TX) and MT-TX. That is, the DU is configured as a downlink (Downlink, DL), and the MT is configured as an uplink (Uplink, UL); or DL-transmission actually exists in the DU and UL-transmission actually exists in the MT.

DU-reception (DU-RX) and MY-RX. That is, the DU is configured as a UL, and the MT is configured as a DL; or UL-reception actually exists in the DU and DL-reception actually exists in the MT.

DU-TX and MT-RX. That is, the DU is configured as a DL, and the MT is configured as a DL; or DL-transmission actually exists in the DU and DL-reception actually exists in the MT.

DU-RX and MT-TX. That is, the DU is configured as a UL, and the MT is configured as a UL; or UL-reception actually exists in the DU and UL-transmission actually exists in the MT.

### 2. Multiplexing mode.

Three multiplexing modes, including SDM, FDM, and multiple pannel transmission reception (Multiple Pannel Transmission Reception, MPTR), all relate to inter-hop coordination and scheduling.

The SDM means that one IAB node receives a physical downlink shared channel (Physical downlink shared channel, PDSCH) from a parent IAB node of the IAB node and receives a physical uplink shared channel (Physical Uplink Shared Channel, PUSCH) from a child IAB node of the IAB node or a UE simultaneously on a same time-frequency resource, or one IAB node transmits a PUSCH to a parent IAB node of the IAB node and transmits a PDSCH to a child IAB node of the IAB node or a UE simultaneously on a same time-frequency resource.

The FDM means that one IAB node receives a PDSCH from a parent IAB node of the IAB node and receives a PUSCH from a child IAB node of the IAB node or a UE simultaneously on different frequency resources, or one IAB node sends a PUSCH to a parent IAB node of the IAB node and sends a PDSCH to a child IAB node of the IAB node or a UE simultaneously on different frequency resources.

The Full Duplex means that one IAB node receives a PDSCH from a parent IAB node of the IAB node and sends a PDSCH to a child IAB node of the IAB node or a UE simultaneously, or one IAB node transmits a PUSCH to a parent IAB node of the IAB node and receives a PUSCH from a child IAB node of the IAB node or a UE simultaneously on a same time-frequency resource. The MPTR is a technology in which an IAB node uses different antenna panels (panel) to simultaneously perform separate transmission and reception. For example, one IAB node is provided with two antenna panels, and when one panel performs reception, the other panel performs transmission. There may be a higher isolation between transmission reception antenna panels of the MPTR, which may reduce an interference in reception caused by transmission to some extent.

As shown in FIG. 3, an inter-hop SDM/FDM/MPTR-based scheduling relationship in an IAB network is shown. A hop (Hop) between a first node IABN (IAB node) and UE of a third node or a child IAB node (Child IAB node, C-IABN) is referred to as a Hopl, scheduled by the first node. A hop between a first IAB node and a second node is referred to as a Hop2, scheduled by the second node. The second node is a parent IAB node (Parent IAB node, P-IABN) of the first node, and in this case, the following multiplexing modes may exist between a DU and an MT in the foregoing first node:
multiplexing mode 1 (SDM TX): MT TX, and DU TX;
multiplexing mode 2 (SDM RX): MT RX, and DU RX;
multiplexing mode 3 (FDM TX): MT TX, and DU TX;
multiplexing mode 4 (FDM RX): MT RX, and DU RX;
multiplexing mode 5 (MPTR UL): MT TX, and DU RX; and
multiplexing mode 6 (MPTR DL): MT RX, and DU TX.

### 3. Resource configuration of a DU.

A Donor node CU configures a resource of a DU by using gNB-DU resource configuration (resource configuration) signaling. A transmission direction of a symbol in each slot is configured, and a symbol (symbol) direction includes at least one of the following: a DL symbol, a UL symbol, and a flexible (flexible) symbol. Available cases of each type of symbol of the DU are configured, including a hard (hard), soft (soft), and not available (not available) type of configuration. The available cases use a symbol type as a configuration unit, and further include the following cases.

If a first object is configured as hard, an IAB DU may automatically perform a corresponding first operation on the symbol. The first object may include any one of a DL symbol, a UL symbol, and a flexible symbol (flexible symbol). For example, when the first object is a DL symbol, the first operation is transmission; when the first object is a UL symbol, the first operation is reception; and when the first object is a flexible symbol, the first operation is transmission or reception.

If a DL/UL/flexible symbol is configured as soft, and a first operation of an IAB DU does not affect transmission or reception of an MT, the IAB DU may perform the first operation on the symbol; otherwise, the first operation is not performed on the symbol. Further, a parent IAB node may indicate available cases of a slot symbol (soft symbol) of the IAB DU by using a downlink control information (Downlink Control Information, DCI) format (format) 2-5.

If a DL/UL/flexible symbol is configured as not available, an IAB DU performs neither transmission nor reception on the symbol.

### 4. Resource configuration of an MT.

A resource of an MT is configured by a CU/parent node, and is configured by using a time division duplex (Time Division Duplex, TDD) configuration (configuration) in RRC signaling, DCI signaling, or the like. A resource type of the MT is a DL/LTL/Flexible symbol.

The transmission processing method and apparatus, and the communication device according to the embodiments of this application are described in detail below with reference to the accompany drawings through specific embodiments and application scenarios thereof.

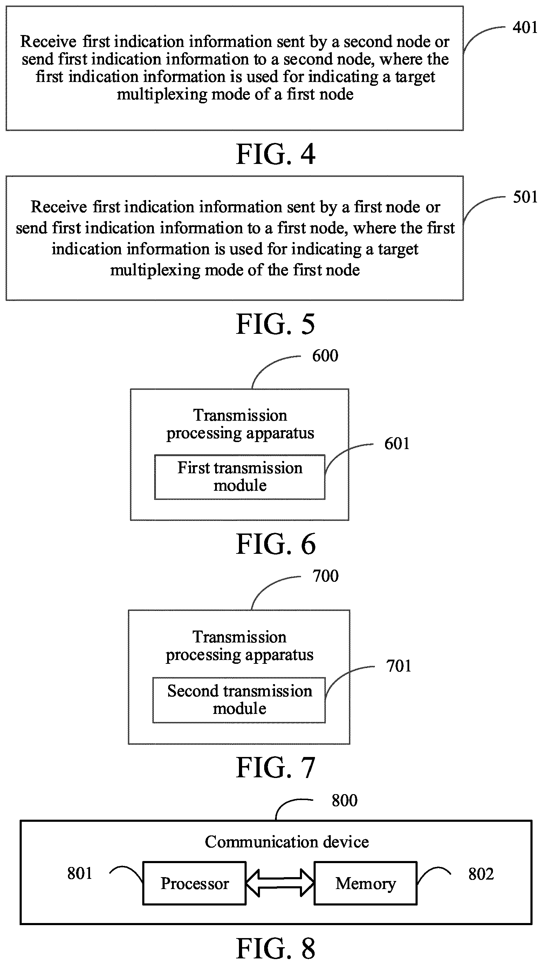

Referring to FIG. 4, FIG. 4 is a flowchart of a transmission processing method according to an embodiment of this application. The method is performed by a first node, as shown in FIG. 4, and includes the following steps.

Step 401: Receive first indication information sent by a second node or send first indication information to a second node, where the first indication information is used for indicating a target multiplexing mode of the first node.

The second node is a donor node or a parent node of the first node.

In this embodiment of this application, the foregoing first node may be understood as an IAB node. The target multiplexing mode may be understood as a multiplexing state presented in final transmission of a DU and an MT in the first node. Specifically, the target multiplexing mode may include any one of the foregoing multiplexing modes 1 to 6.

Optionally, in some embodiments, a multiplexing mode of the first node may be determined by the second node. In this case, a behavior of the first node is: receiving the first indication information sent by the second node. For example, the second node may first determine the target multiplexing mode of the first node in a plurality of multiplexing modes, and then send the first indication information to the first node based on the selected target multiplexing mode.

In some embodiments, a current multiplexing mode may be determined by the first node itself. In this case, the behavior of the first node is: sending the first indication information to the second node. For example, the first node first determines the target multiplexing mode of the first node in a plurality of multiplexing modes, and then sends the first indication information to the second node based on the selected target multiplexing mode, to notify the second node of the currently selected target multiplexing mode.

In this embodiment of this application, the multiplexing mode may be understood as a scheduling plan. That is to say, the foregoing target multiplexing mode may be understood as a target scheduling plan. For example, in some embodiments, the foregoing first indication information may be further used for indicating at least one of the following: scheduling of a DU and scheduling of an MT. In other words, in this embodiment of this application, by indicating the scheduling of the DU and/or the scheduling of the MT, the first indication information may determine the multiplexing mode of the first node based on the scheduling of the DU and/or the scheduling of the MT.

In this embodiment of this application, the first indication information sent by the second node is received or the first indication information is sent to the second node, where the first indication information is used for indicating the target multiplexing mode of the first node, where the second node is a donor node or a parent node of the first node. In this way, because the first node or the second node may determine the target multiplexing mode of the first node, and indicate the target multiplexing mode of the first node by using the first indication information, the multiplexing mode of the first node may be dynamically adjusted by using the first indication information, which improves the reliability of multiplexing transmission. In addition, efficiency of system transmission is improved and a transmission delay is reduced.

Optionally, in some embodiments, the method further includes:
performing transmission or scheduling in the target multiplexing mode.

Optionally, the first node performs transmission or scheduling in the target multiplexing mode, which may be understood as including at least one of the following.

The DU in the first node may perform transmission or scheduling in the target multiplexing mode. For example, the DU in the first node may invoke a target resource in the target multiplexing mode, where the target resource is used in data transmission between a child IAB node of the first node or a UE and the first node.

The MT in the first node may perform transmission in the target multiplexing mode. For example, the MT may perform data transmission with the parent node of the first node in the target multiplexing mode.

It is to be noted that, the foregoing first indication information may be: resource allocation of the DU, or resource allocation of the MT. If the first indication information is resource allocation of the DU, the DU performs transmission based on the first indication information. If the first indication information is resource allocation of the MT, the DU performs transmission in a case that transmission of the MT is not affected.

It should be understood that, in this embodiment of this application, transmission may be understood as sending or receiving.

It is to be noted that, in this embodiment of this application, the foregoing transmission or scheduling may be periodic, or may be non-periodic. For example, in some embodiments, the performing scheduling or transmission in the target multiplexing mode includes at least one of the following:
performing periodic transmission or scheduling in the target multiplexing mode; and
performing transmission or scheduling in the target multiplexing mode in a preset time periodicity.

In this embodiment of this application, in the preset time periodicity, periodic transmission or scheduling may also be performed, or transmission or scheduling may only be performed once, which is not further limited herein.

In some embodiments, the foregoing first indication information may carry a related parameter, to indicate an effective time window of the target multiplexing mode. For example, if an effective time is configured periodically, the multiplexing mode 1 may be enabled in a periodicity 1, and the multiplexing mode 2 may be enabled in a periodicity 2. Alternatively, the multiplexing mode itself carries a periodicity value, which may change a periodicity of the multiplexing mode, that is, indicate an effective time window of a multiplexing mode corresponding to next multiplexing transmission.

Optionally, in some embodiments, after the step of receiving first indication information sent by a second node, the method further includes:
performing, in a case that the first indication information is not received, transmission or scheduling in a default multiplexing mode.

It should be understood that, in this embodiment of this application, receiving indication information sent by the second node is a reception behavior of the first node. Specifically, the first node may have an action of the reception behavior, but nothing may be received actually. For example, the second node gives up sending the first indication information due to a network situation. In this case, transmission or scheduling may be performed based on the default multiplexing mode.

Optionally, unsuccessful reception may be understood as that the first indication information is not received, or the first indication information is received but is not successfully demodulated to obtain the target multiplexing mode.

The default multiplexing mode may be a default multiplexing mode determined by at least one of a protocol-preagreement, a preconfiguration, or a configuration. For example, one multiplexing mode may be directly agreed in a protocol, preconfigured, or configured as the default multiplexing mode, or a plurality of multiplexing modes may be agreed in a protocol and then one of the plurality of multiplexing modes is preconfigured or configured as the default multiplexing mode. Certainly, in other embodiments, another manner may also be used, and details are not described herein.

Optionally, in a case that the first node receives the first indication information, the first indication information is carried in a physical downlink control channel (Physical downlink control channel, PDCCH), downlink control information DCI, a medium access control control element (Medium Access Control Control Element, MAC CE), radio resource control (Radio Resource control, RRC), UE assistance information (UE assistance information), or on a backhaul access protocol (backhaul access protocol, BAP) control (control) protocol data unit (Protocol Data Unit, PDU).

Optionally, in some embodiments, the first indication information includes a target parameter associated with the target multiplexing mode, and the target parameter includes any one of the following: a code point of the PDCCH, a sequence of a physical uplink control channel (Physical Uplink Control Channel, PUCCH), a cyclic offset of the PUCCH, a sequence of a demodulation reference signal (Demodulation Reference Signal, DMRS) of the PUCCH, a cyclic offset of the demodulation reference signal DMRS of the PUCCH, and frequency hopping of the demodulation reference signal DMRS of the PUCCH.

In this embodiment of this application, a mapping relationship between the target parameter and the multiplexing mode may be set in at least one of a protocol-predefined manner, a preconfigured manner, or a configured manner. The target parameter is carried in the first indication information. In this way, the target multiplexing mode indicated by the first indication information may be determined according to the mapping relationship between the target parameter and the multiplexing mode. The reconfiguration and configuration may be performed by a CU of a donor node, or may be performed by a parent IAB node, which is not further limited herein.

The foregoing code point of the PDCCH may be understood as a bit value showing an indication on the carried PDCCH. For example, the code point may be represented by N bits. The code point is associated with the multiplexing mode. For example, a code point 1 is associated with the multiplexing mode 1, and a code point 2 is associated with the multiplexing mode 2. In other words, the code point of the PDCCH may be understood as an identifier value of the multiplexing mode. For example, the code point 1 is used to represent the multiplexing mode 1, and the code point 2 is used to represent the multiplexing mode 2.

It should be understood that, resource configuration of the target multiplexing mode may be protocol-predefined, preconfigured, or configured above. In some embodiments, resource configuration of the target multiplexing mode includes at least one of the following: a time domain location, a periodicity indication, a time domain resource indication, a frequency domain resource indication, a space domain resource indication, a rank indication, a beam indication (beam index), a transmission configuration indication, a power indication, an interference indication, and a modulation and coding scheme (Modulation and coding scheme, MCS) indication.

The foregoing time domain location may include an offset value, or the like, for example: a multiplexing mode is carried in a PDCCH, and a time interval between the PDCCH and the multiplexing mode is predefined as a. If an IAB node receives a scheduling plan carried in the PDCCH at a slot n, the IAB node uses the multiplexing mode to perform scheduling or transmission at a slot (n+a). It should be understood that a specific time granularity of the resource configuration may be a slot, a symbol, a sub-frame, a millisecond, or the like. The foregoing is only described by using the slot as an example, a is a value greater than or equal to 0, or may be a decimal number. Optionally, the value of a is related to a subcarrier spacing.

The foregoing space domain resource indication may be a beam index (beam index).

The foregoing power indication may be further used for indicating a magnitude of power, a ratio of power, or the like.

The foregoing MCS indication may be further used for indicating a value of the MCS or a range of the MCS.

The foregoing interference indication may be understood as: information about that interference is allowed or not allowed, for example, when an interference condition is not satisfied, transmission or scheduling may be performed in the target multiplexing mode.

It should be noted that the foregoing resource configuration may take effect periodically or take effect by event trigger.

For example, in some embodiments, if the resource configuration is triggered periodically, the target multiplexing mode is enabled on a corresponding time domain resource based on a configured periodicity. Optionally, if the periodicity is 0, the resource configuration takes effect once.

If the resource configuration takes effect by event trigger, when a predefined/preconfigured/configured effective condition is satisfied, a corresponding multiplexing mode is enabled. If the predefined/preconfigured/configured effective condition is not satisfied, a current multiplexing mode is not changed, or, the default multiplexing mode is used.

Optionally, in some embodiments, after the step of receiving first indication information sent by a second node, the method further includes:
sending, in a case that the first node does not support the target multiplexing mode, second indication information to the second node, where the second indication information is used for indicating to terminate the target multiplexing mode.

Certainly, in other embodiments, information about the target multiplexing mode may also be terminated by the parent IAB node. For example, in some embodiments, assuming that a multiplexing mode of the first node has been configured, the current multiplexing mode is not suitable due to a wireless environment change between an upper hop and a lower hop (that is the first node and the child IAB node or the UE or the parent IAB node), which further includes the following behaviors:
the first node may send an indication for terminating multiplexing scheduling between the upper hop and the lower hop to the parent IAB node of the first node; the parent IAB node does not use a hard resource of a child IAB-DU after receiving the termination indication;
the parent IAB node may send the indication for terminating multiplexing scheduling of the up-and-down hops to a child IAB node of the parent IAB node; and after the child IAB node receives the termination indication, when a DU of the child IAB node schedules a child IAB-MT or a UE, a reception behavior of a MT of the child IAB node is not affected.

Optionally, each of the first indication information and the second indication information includes at least one of the following: a periodicity indication, a time offset, a time domain resource indication, a frequency domain resource indication, a resource configuration type indication, a rank indication, a beam indication, a power indication, an interference indication, and a modulation and coding scheme MCS indication.

In this embodiment of this application, contents included in the first indication information and the second indication information may be the same or may be different, which is not further limited herein. The resource configuration type may include at least one of the following:
a first type, where the first type may be understood as including at least one of UL, DL, and Flexible; and
a second type, where the second type may be understood as including at least one of Hard, Soft, and Not available.

Optionally, in some embodiments, the method further includes:
sending third indication information to the second node, where the third indication information is used for indicating a recommended multiplexing mode, and the recommended multiplexing mode is used for determining the target multiplexing mode.

In this embodiment of this application, the foregoing third indication information may be carried on a PDCCH, uplink control information (Uplink Control Information, UCI), or an MAC CE. The recommended multiplexing mode is reported to the second node through the first node. In this way, that the target multiplexing mode may be well adapted to the first node may be ensured, thereby improving reliability of multiplexing transmission.

Optionally, the third indication information includes at least one of the following: a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, frequency hopping of the demodulation reference signal DMRS of the PUCCH, and a code point of the PUCCH.

It should be understood that, in a case that the second node does not support the recommended multiplexing mode, the target multiplexing mode is a default multiplexing mode.

In this embodiment of this application, the recommended multiplexing mode is determined by the first node based on a network situation of the up-and-down hops. However, the second node may need to serve a plurality of child IAB nodes, so there exists a conflict. Alternatively, when a parent node of a second node schedules transmission of an MT of the second node, there exists a conflict with scheduling of a DU of the second node. In this case, the second node cannot support the target multiplexing mode of the first node, and the second node may indicate the default multiplexing mode to the first node, thereby ensuring reliability of multiplexing transmission.

It should be understood that, the first node may report the third indication information periodically or by condition trigger. That is to say, in some embodiments, the sending third indication information to the second node includes at least one of the following:
periodically sending the third indication information to the second node based on a first preset periodicity; and
sending, in a case that a preset reporting condition is satisfied, the third indication information to the second node, where
the reporting condition is a predefined, preconfigured, or configured trigger condition.

The foregoing first preset periodicity may be determined by protocol-predefinition, preconfiguration, or configuration, which is not further limited herein.

It is to be noted that, an indication granularity associated with the target multiplexing mode includes at least one of the following: M time units and N frequency domain units, where
both M and N are positive integers, the time unit is a sub-frame, a slot, a symbol, or a periodicity, and a frequency domain granularity includes a physical resource block (Physical Resource Block, PRB), a sub-band, a precoding resource block group (Precoding Resource Block Group, PRG), a sub-carrier, or a resource element (Resource element, RE).

In addition, an indication granularity associated with the recommended multiplexing mode may include at least one of the following: M1 time units and N1 frequency domain units, where
both M1 and N1 are positive integers, the time unit is a sub-frame, a slot, a symbol, or a periodicity, and a frequency domain granularity includes a physical resource block PRB, a sub-band, a precoding resource block group PRG, a sub-carrier, or a resource element RE.

Optionally, in some embodiments, the receiving first indication information sent by a second node includes receiving, based on a second preset periodicity, the first indication information sent by the second node.

Optionally, in some embodiments, the sending first indication information to a second node includes sending the first indication information to the second node based on a third preset periodicity.

In this embodiment of this application, through periodic sending or receiving the first indication information, the multiplexing mode may be dynamically adjusted, and reliability of multiplexing of the MT and the DU in the first node may be improved.

It is to be noted that, in some embodiments, it may be a terminal that reports DU scheduling information of an IAB node to the corresponding accessed IAB node, where the DU scheduling information is used for indicating scheduling of the IAB node. Then, the IAB node may perform transmission or scheduling based on the DU scheduling information reported by the terminal, that is, a DU in the IAB node may perform resource scheduling based on the DU scheduling information to implement transmission between the DU and the UE.

Further, in this embodiment of this application, when it is the first node that sends the first indication information to the second node, to notify the second node of the multiplexing mode of the first node, the foregoing first indication information may include at least one of the following: a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, frequency hopping of the demodulation reference signal DMRS of the PUCCH, and a code point of the PUCCH.

For the foregoing sequence of the PUCCH, a sequence 1 may be used to represent the multiplexing mode 1, and a sequence 2 may be used to represent the multiplexing mode 2. For example, the first node may find a corresponding PUCCH sequence according to a supportable multiplexing mode, and report the corresponding PUCCH sequence to the parent IAB node, and the parent IAB node determines the target multiplexing mode based on the received PUCCH sequence and a correspondence between the sequence and the multiplexing mode.

The foregoing code point of the PUCCH may be understood as N bit information that is explicitly carried in the PUCCH for indicating the multiplexing mode. A mapping relationship between each multiplexing mode and the code point is protocol-predefined/preconfigured/configured, and a parent IAB node may determine the target multiplexing mode indicated by the first node based on the received code point of the PUCCH. The preconfiguration/configuration may be performed by the CU of the donor node or by the parent IAB node. For example, the first node finds a corresponding code point according to an acceptable multiplexing mode and a mapping relationship, and sends the corresponding code point to the parent IAB node. The parent IAB node obtains a corresponding multiplexing mode based on the received code point and a mapping relationship between the code point and the multiplexing mode.

The foregoing UCI may be transmitted through the PUCCH, or may be reused on the PUSCH, which is not further limited herein.

For better understanding of implementation of this application, an implementation process of this application is described in detail below through some embodiments.

Embodiment 1, specifically including the following procedure:
1. a mapping relationship between a multiplexing mode and a code point of information carried in a PUCCH is predefined;
2. an IAB node reports an acceptable multiplexing mode list periodically/based on event trigger in a predefined/(pre)configured manner, where the multiplexing mode list includes one or a plurality of multiplexing modes, and the IAB node carries the multiplexing mode list in an MAC CE/the PUCCH, or reports the multiplexing mode list by using UE assistance information;
3. the IAB node sends the PUCCH to a parent IAB node/donor node, based on a supported multiplexing mode list and the mapping relationship between the multiplexing mode and the code point of information carried in the PUCCH;
4. the parent IAB node/donor node obtains a corresponding multiplexing mode list based on information about the received PUCCH and the mapping relationship between the multiplexing mode and the code point of information carried in the PUCCH; the parent IAB node determines the multiplexing mode, and carries a multiplexing mode indication in a PDCCH; and
5. the IAB node receives PDCCH signaling at a slot n, and obtains information about the multiplexing mode and an effective time window of the multiplexing mode; and the IAB node uses the multiplexing mode to transmit a resource at a slot (n+a).

Embodiment 2, specifically including the following procedure:
1. a parent IAB node/donor node configures a scheduling plan to be reported periodically, and configures a sending periodicity of the scheduling plan;
2. an IAB node reports, in a resource of a configured reporting periodicity, a scheduling plan list to the parent IAB node through an MAC CE;
3. the parent IAB node determines the scheduling plan, and carries the scheduling plan in a PDCCH, where the scheduling plan includes an effective time window of the scheduling plan; and
4. the IAB node performs, based on the scheduling plan indicated in the PDCCH, scheduling based on the indicated scheduling plan in the effective window of the scheduling plan.

It should be understood that, in this embodiment this application, the IAB node periodically reports the scheduling plan, and dynamically indicates the scheduling plan.

Referring to FIG. 5, FIG. 5 is a flowchart of another transmission processing method according to an embodiment of this application. The method is performed by a second node, as shown in FIG. 5, and includes the following steps.

Step 501: Receive first indication information sent by a first node or send first indication information to a first node, where the first indication information is used for indicating a target multiplexing mode of the first node.

The second node is a donor node or a parent node of the first node.

Optionally, the first indication information is further used for indicating at least one of the following: scheduling of a distributed unit DU and scheduling of a mobile termination MT.

Optionally, in a case that the first node receives the first indication information, the first indication information is carried on a PDCCH, downlink control information DCI, a medium access control control element MAC CE, radio resource control RRC, or a backhaul access protocol control protocol data unit.

Optionally, the first indication information includes a target parameter associated with the target multiplexing mode, and the target parameter includes any one of the following: a code point of the PDCCH, a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, and frequency hopping of the demodulation reference signal DMRS of the PUCCH.

Optionally, resource configuration of the target multiplexing mode includes at least one of the following: a time domain location, a periodicity indication, a time domain resource indication, a frequency domain resource indication, a space domain resource indication, a rank indication, a beam indication, a transmission configuration indication, a power indication, an interference indication, and a modulation and coding scheme MCS indication.

Optionally, after the step of receiving first indication information sent by a first node, the method further includes:
sending, in a case that the second node does not support the target multiplexing mode, fourth indication information to the first node, where the fourth indication information is used for indicating to terminate the target multiplexing mode; and the second node is the donor node or the parent node of the first node.

Optionally, each of the first indication information and the fourth indication information includes at least one of the following: a periodicity indication, a time offset, a time domain resource indication, a frequency domain resource indication, a resource configuration type indication, a rank indication, a beam indication, a power indication, an interference indication, and a modulation and coding scheme MCS indication.

Optionally, the method further comprises:
receiving third indication information sent by the first node, where the third indication information is used for indicating a recommended multiplexing mode, and the recommended multiplexing mode is used for determining the target multiplexing mode.

Optionally, the third indication information includes at least one of the following: a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, frequency hopping of the demodulation reference signal DMRS of the PUCCH, and a code point of the PUCCH.

Optionally, in a case that the second node does not support the recommended multiplexing mode, the target multiplexing mode is a default multiplexing mode; and the second node is the donor node or the parent node of the first node.

Optionally, the receiving third indication information sent by the first node includes at least one of the following:
receiving, based on a first preset periodicity, the third indication information sent by the first node; and
receiving, in a case that a preset reporting condition is satisfied, the third indication information sent by the first node, where
the reporting condition is a predefined, preconfigured, or configured trigger condition.

Optionally, an indication granularity associated with the target multiplexing mode includes at least one of the following: M time units and N frequency domain units, where
both M and N are positive integers, the time unit is a sub-frame, a slot, a symbol, or a periodicity, and a frequency domain granularity includes a physical resource block PRB, a sub-band, a precoding resource block group PRG, a sub-carrier, or a resource element RE.

It is to be noted that, this embodiment is an implementation of the second node corresponding to the embodiment shown in FIG. 4. For a specific implementation of this embodiment, reference may be made to related descriptions of the embodiment shown in FIG. 4, and the same beneficial effects may be achieved. Details are not described herein again to avoid repetition.

It is to be noted that, the transmission processing method according to the embodiments of this application may be performed by a transmission processing apparatus, or, a control module configured to perform the transmission processing method in the transmission processing apparatus. In the embodiments of this application, the transmission processing apparatus provided in the embodiments of this application is described by using an example in which the transmission processing method is performed by the transmission processing apparatus.

Referring to FIG. 6, FIG. 6 is a structural diagram of a transmission processing apparatus according to an embodiment of this application. As shown in FIG. 6, a transmission processing apparatus 600 includes:
a first transmission module 601, configured to receive first indication information sent by a second node or send first indication information to a second node, where the first indication information is used for indicating a target multiplexing mode of the first node, where
the second node is a donor node or a parent node of the first node.

Optionally, the first indication information is further used for indicating at least one of the following: scheduling of a distributed unit DU and scheduling of a mobile termination MT.

Optionally, a first transmission module 601 is further configured to: perform transmission or scheduling in the target multiplexing mode.

Optionally, the first transmission module 601 is further configured to perform at least one of the following:
performing periodic transmission or scheduling in the target multiplexing mode; and
performing transmission or scheduling in the target multiplexing mode in a preset time periodicity.

Optionally, the first transmission module 601 is further configured to: perform, in a case that the first indication information is not received, transmission or scheduling in a default multiplexing mode.

Optionally, in a case that the first node receives the first indication information, the first indication information is carried on a PDCCH, downlink control information DCI, a medium access control control element MAC CE, radio resource control RRC, or a backhaul access protocol control protocol data unit.

Optionally, the first indication information includes a target parameter associated with the target multiplexing mode, and the target parameter includes any one of the following: a code point of the PDCCH, a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, and frequency hopping of the demodulation reference signal DMRS of the PUCCH.

Optionally, resource configuration of the target multiplexing mode includes at least one of the following: a time domain location, a periodicity indication, a time domain resource indication, a frequency domain resource indication, a space domain resource indication, a rank indication, a beam indication, a transmission configuration indication, a power indication, an interference indication, and a modulation and coding scheme MCS indication.

Optionally, the resource configuration takes effect periodically or takes effect by event trigger.

Optionally, after the step of receiving first indication information sent by a second node, the method further includes:
sending, in a case that the first node does not support the target multiplexing mode, second indication information to the second node, where the second indication information is used for indicating to terminate the target multiplexing mode.

Optionally, each of the first indication information and the second indication information includes at least one of the following: a periodicity indication, a time offset, a time domain resource indication, a frequency domain resource indication, a resource configuration type indication, a rank indication, a beam indication, a power indication, an interference indication, and a modulation and coding scheme MCS indication.

Optionally, the first transmission module 601 is further configured to: send third indication information to the second node, where the third indication information is used for indicating a recommended multiplexing mode, and the recommended multiplexing mode is used for determining the target multiplexing mode.

Optionally, the third indication information includes at least one of the following: a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, frequency hopping of the demodulation reference signal DMRS of the PUCCH, and a code point of the PUCCH.

Optionally, in a case that the second node does not support the recommended multiplexing mode, the target multiplexing mode is a default multiplexing mode.

Optionally, the first transmission module 601 is further configured to perform at least one of the following:
periodically sending the third indication information to the second node based on a first preset periodicity; and
sending, in a case that a preset reporting condition is satisfied, the third indication information to the second node, where
the reporting condition is a predefined, preconfigured, or configured trigger condition.

Optionally, an indication granularity associated with the target multiplexing mode includes at least one of the following: M time units and N frequency domain units, where
both M and N are positive integers, the time unit is a sub-frame, a slot, a symbol, or a periodicity, and a frequency domain granularity includes a physical resource block PRB, a sub-band, a precoding resource block group PRG, a sub-carrier, or a resource element RE.

Optionally, the first transmission module 601 is further configured to: receive, based on a second preset periodicity, the first indication information sent by the second node.

Optionally, the first transmission module 601 is further configured to: send the first indication information to the second node based on a third preset periodicity.

The transmission processing apparatus according to this embodiment of this application can implement all processes of the method embodiments shown in FIG. 4, and details are not described herein again to avoid repetition.

Referring to FIG. 7, FIG. 7 is a structural diagram of a transmission processing apparatus according to an embodiment of this application. As shown in FIG. 7, a transmission processing apparatus 700 includes:
a second transmission module 701, configured to receive first indication information sent by a first node or send first indication information to a first node, where the first indication information is used for indicating a target multiplexing mode of the first node.

Optionally, the first indication information is further used for indicating at least one of the following: scheduling of a distributed unit DU and scheduling of a mobile termination MT.

Optionally, in a case that the first node receives the first indication information, the first indication information is carried on a PDCCH, downlink control information DCI, a medium access control control element MAC CE, radio resource control RRC, or a backhaul access protocol control protocol data unit.

Optionally, the first indication information includes a target parameter associated with the target multiplexing mode, and the target parameter includes any one of the following: a code point of the PDCCH, a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, and frequency hopping of the demodulation reference signal DMRS of the PUCCH.

Optionally, resource configuration of the target multiplexing mode includes at least one of the following: a time domain location, a periodicity indication, a time domain resource indication, a frequency domain resource indication, a space domain resource indication, a rank indication, a beam indication, a transmission configuration indication, a power indication, an interference indication, and a modulation and coding scheme MCS indication.

Optionally, the second transmission module 701 is further configured to: send, in a case that the second node does not support the target multiplexing mode, fourth indication information to the first node, where the fourth indication information is used for indicating to terminate the target multiplexing mode; and the second node is the donor node or the parent node of the first node.

Optionally, each of the first indication information and the fourth indication information includes at least one of the following: a periodicity indication, a time offset, a time domain resource indication, a frequency domain resource indication, a resource configuration type indication, a rank indication, a beam indication, a power indication, an interference indication, and a modulation and coding scheme MCS indication.

Optionally, the second transmission module 701 is further configured to: receive third indication information sent by the first node, where the third indication information is used for indicating a recommended multiplexing mode, and the recommended multiplexing mode is used for determining the target multiplexing mode.

Optionally, the third indication information includes at least one of the following: a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, frequency hopping of the demodulation reference signal DMRS of the PUCCH, and a code point of the PUCCH.

Optionally, in a case that the second node does not support the recommended multiplexing mode, the target multiplexing mode is a default multiplexing mode; and the second node is the donor node or the parent node of the first node.

Optionally, the second transmission module 701 is further configured to perform at least one of the following:
receiving, based on a first preset periodicity, the third indication information sent by the first node; and
receiving, in a case that a preset reporting condition is satisfied, the third indication information sent by the first node, where
the reporting condition is a predefined, preconfigured, or configured trigger condition.

Optionally, an indication granularity associated with the target multiplexing mode includes at least one of the following: M time units and N frequency domain units, where
both M and N are positive integers, the time unit is a sub-frame, a slot, a symbol, or a periodicity, and a frequency domain granularity includes a physical resource block PRB, a sub-band, a precoding resource block group PRG, a sub-carrier, or a resource element RE.

The transmission processing apparatus according to this embodiment of this application can implement all processes of the method embodiments shown in FIG. 5, and details are not described herein again to avoid repetition.

The transmission processing apparatus in the embodiments of this application may be an apparatus, or may be a component, an integrated circuit, or a chip in a terminal. The apparatus may be a mobile terminal or may be a non-mobile terminal. Exemplarily, the mobile terminal may include but is not limited to the category of the terminal 11 listed above. The non-mobile terminal may be a server, a network attached storage (Network Attached Storage, NAS), a personal computer (personal computer, PC), a television (television, TV), a teller machine, a self-service machine, or the like, which is not specifically limited in the embodiments of this application.

The transmission processing apparatus in the embodiments of this application may be an apparatus with an operating system. The operating system may be an Android (Android) operating system, an ios operating system, or another possible operating system, which is not specifically limited in the embodiments of this application.

The transmission processing apparatuses according to the embodiments of this application can implement all processes implemented by the method embodiments shown in FIG. 4 and FIG. 5, and the same beneficial effects can be achieved. Details are not described herein again to avoid repetition.

Optionally, as shown in FIG. 8, an embodiment of this application further provides a communication device 800, including a processor 801, a memory 802, and a program or an instruction stored in the memory 802 and runnable on the processor 801, where when the program or the instruction is executed by the processor 801, all processes of the foregoing transmission processing method are implemented, and the same technical effects can be achieved. To avoid repetition, details are not described herein again.

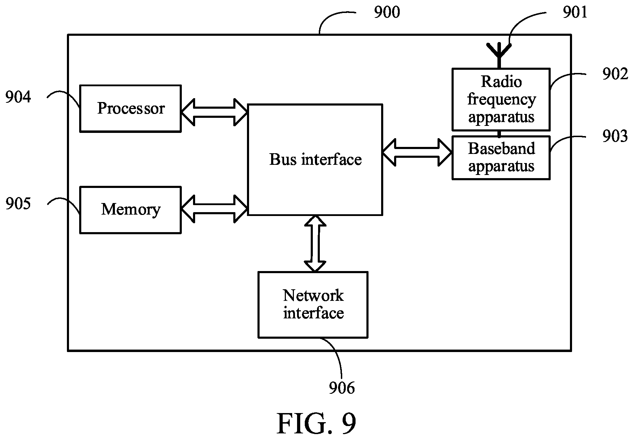

Specifically, an embodiment of this application further provides a network device. As shown in FIG. 9, a network device 900 includes: an antenna 901, a radio frequency apparatus 902, and a baseband apparatus 903. The antenna 901 is connected to the radio frequency apparatus 902. In an upward direction, the radio frequency apparatus 902 receives information through the antenna 901 and sends the received information to the baseband apparatus 903 for processing. In a downward direction, the baseband apparatus 903 processes the information to be sent and sends the processed information to the radio frequency apparatus 902. The radio frequency apparatus 902 processes the received information and sends the processed received information out through the antenna 901.

A band processing apparatus may be located in the baseband apparatus 903, and the method executed by the communication device in the above embodiments may be implemented in the baseband apparatus 903, where the baseband apparatus 903 includes a processor 904 and a memory 905.

The baseband apparatus 903 may, for example, include at least one baseband board, where a plurality of chips are disposed on the baseband board. As shown in FIG. 9, one of the chips is, for example, the processor 904, connected with the memory 905 to invoke a program in the memory 905 to perform network device operations shown in the method embodiments above.

The baseband apparatus 903 may further include a network interface 906, configured to interact information with the radio frequency apparatus 902, and the network interface is, for example, a common public radio interface (common public radio interface, CPRI).

Specifically, the communication device of this embodiment of this application further includes: an instruction or a program stored in the memory 905 and runnable on the processor 904, and the processor 904 invokes the instruction or the program in the memory 905 to perform the method performed by the modules shown in FIG. 6 or 7, and achieves the same technical effects, which are not described in detail herein again to avoid repetition.

An embodiment of this application further provides a readable storage medium, storing a program or an instruction, where when the program or the instruction is executed by a processor, all processes of the foregoing transmission processing method embodiments are implemented and the same technical effects can be achieved, which are not described in detail herein again to avoid repetition.

The processor is the processor in the communication device described in the foregoing embodiment. The readable storage medium includes a computer-readable storage medium, such as, a read-only memory (Read-Only Memory, ROM), a random access memory (Random Access Memory, RAM), a magnetic disk, or an optical disk.

An embodiment of this application further provides a chip, including a processor and a communication interface, where the communication interface is coupled to the processor, and the processor is configured to run a network device program or an instruction to implement all processes of the foregoing transmission processing method embodiments and the same technical effects can be achieved. Details are not described herein again to avoid repetition.

It is to be understood that the chip mentioned in this embodiment of this application may also be referred to as a system-level chip, a system chip, a chip system, a system-on-a-chip chip, or the like.

It is to be noted that, the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by a sentence "including one" does not exclude that there are still other same elements in the processes, methods, objects, or apparatuses. In addition, it is to be noted that, the scope of the method and apparatus in the embodiments of this application is not limited to performing the functions in the order shown or discussed, but may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Through the descriptions of the foregoing implementations, a person skilled in the art may clearly understand that the method according to the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a base station, or the like) to perform the methods described in the embodiments of this application.

A person of ordinary skill in the art may be aware that, in combination with the examples of units and algorithm steps described in the embodiments disclosed in this specification, this application may be implemented by using electronic hardware or a combination of computer software and electronic hardware. Whether the functions are executed in a mode of hardware or software depends on particular applications and design constraint conditions of the technical solutions. Those skilled in the art may use different methods to implement the described functions for each particular application, but such implementation is not to be considered beyond the scope of this application.

Those skilled in the art can clearly understand that for convenience and conciseness of description, the specific working processes of the above-described systems, devices and units can be understood with reference to the corresponding processes in the above-described method embodiments and will not be repeated here.

In the embodiments provided in this application, it is to be understood that the disclosed apparatus and method may be implemented in other manners. For example, the apparatus embodiments described above are merely illustrative. For example, a division of the units is merely a logical function division and may be other division during actual implementation. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to an actual requirement to achieve the objectives of the solutions in the embodiments.

In addition, functional units in the embodiments of this application may be integrated into one processing unit, or each of the units may exist physically separated, or two or more units are integrated into one unit.

When the function is implemented in the form of a software functional unit and sold or used as an independent product, the function may be stored in a computer-readable storage medium. Based on such an understanding, the technical solutions of the present invention essentially, or the part contributing to the prior art, or some of the technical solutions may be implemented in a form of a software product. The software product is stored in a storage medium, and comprises several instructions for instructing a computer device (which may be a personal computer, a server, a network device, and the like) to perform all or some of the steps of the methods described in the embodiments of the present invention. The foregoing descriptions are merely specific implementations of this application, but are not intended to limit the protection scope of this application.

A person skilled in the art may understand that all or some of the procedures of the methods of the foregoing embodiments may be implemented by a computer program controlling relevant hardware. The program may be stored in a computer-readable storage medium. When the program is executed, the procedures of the foregoing method embodiments may be implemented. The storage medium may be a magnetic disk, an optical disk, a ROM/RAM, and the like.

The embodiments of this application are described above with reference to the accompanying drawings, but this application is not limited to the foregoing specific embodiments, which are merely illustrative rather than limited. Under the inspiration of this application, a person of ordinary skill in the art can make many forms without departing from the scope of this application and the protection of the claims, all of which fall within the protection of this application.

## Claims

1. A transmission processing method, performed by a first node, the method comprising:
receiving first indication information sent by a second node or sending first indication information to a second node, wherein the first indication information is used for indicating a target multiplexing mode of the first node, wherein
the second node is a donor node or a parent node of the first node.

2. The method according to claim 1, wherein the first indication information is further used for indicating at least one of the following: scheduling of a distributed unit DU and scheduling of a mobile termination MT.

3. The method according to claim 1, further comprising:
performing transmission or scheduling in the target multiplexing mode.

4. The method according to claim 3, wherein the performing scheduling or transmission in the target multiplexing mode comprises at least one of the following:
performing periodic transmission or scheduling in the target multiplexing mode; and
performing transmission or scheduling in the target multiplexing mode in a preset time periodicity.

5. The method according to claim 1, wherein after the step of receiving first indication information sent by a second node, the method further comprises:
performing, in a case that the first indication information is not received, transmission or scheduling in a default multiplexing mode.

6. The method according to claim 1, wherein in a case that the first node receives the first indication information, the first indication information is carried on a physical downlink control channel PDCCH, downlink control information DCI, a medium access control control element MAC CE, radio resource control RRC, or a backhaul access protocol control protocol data unit.

7. The method according to claim 6, wherein the first indication information includes a target parameter associated with the target multiplexing mode, and the target parameter comprises any one of the following: a code point of the PDCCH, a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, and frequency hopping of the demodulation reference signal DMRS of the PUCCH.

8. The method according to claim 7, wherein resource configuration of the target multiplexing mode comprises at least one of the following: a time domain location, a periodicity indication, a time domain resource indication, a frequency domain resource indication, a space domain resource indication, a rank indication, a beam indication, a transmission configuration indication, a power indication, an interference indication, and a modulation and coding scheme MCS indication.

9. The method according to claim 8, wherein the resource configuration takes effect periodically or takes effect by event trigger.

10. The method according to claim 1, wherein after the step of receiving first indication information sent by a second node, the method further comprises:
sending, in a case that the first node does not support the target multiplexing mode, second indication information to the second node, wherein the second indication information is used for indicating to terminate the target multiplexing mode.

11. The method according to claim 10, wherein each of the first indication information and the second indication information comprises at least one of the following: a periodicity indication, a time offset, a time domain resource indication, a frequency domain resource indication, a resource configuration type indication, a rank indication, a beam indication, a power indication, an interference indication, and a modulation and coding scheme MCS indication.

12. The method according to claim 1, further comprising:
sending third indication information to the second node, wherein the third indication information is used for indicating a recommended multiplexing mode, and the recommended multiplexing mode is used for determining the target multiplexing mode.

13. The method according to claim 12, wherein the third indication information comprises at least one of the following: a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, frequency hopping of the demodulation reference signal DMRS of the PUCCH, and a code point of the PUCCH.

14. The method according to claim 12, wherein in a case that the second node does not support the recommended multiplexing mode, the target multiplexing mode is a default multiplexing mode.

15. The method according to claim 12, wherein the sending third indication information to the second node comprises at least one of the following:
periodically sending the third indication information to the second node based on a first preset periodicity; and
sending, in a case that a preset reporting condition is satisfied, the third indication information to the second node, wherein
the reporting condition is a predefined, preconfigured, or configured trigger condition.

16. The method according to claim 1, wherein an indication granularity associated with the target multiplexing mode comprises at least one of the following: M time units and N frequency domain units, wherein
both M and N are positive integers, the time unit is a sub-frame, a slot, a symbol, or a periodicity, and a frequency domain granularity comprises a physical resource block PRB, a sub-band, a precoding resource block group PRG, a sub-carrier, or a resource element RE.

17. The method according to claim 1, wherein the receiving first indication information sent by a second node comprises receiving, based on a second preset periodicity, the first indication information sent by the second node.

18. The method according to claim 1, wherein the sending first indication information to a second node comprises sending the first indication information to the second node based on a third preset periodicity.

19. A transmission processing method, performed by a second node, the method comprising:
receiving first indication information sent by a first node or sending first indication information to a first node, wherein the first indication information is used for indicating a target multiplexing mode of the first node, wherein
the second node is a donor node or a parent node of the first node.

20. The method according to claim 19, wherein the first indication information is further used for indicating at least one of the following: scheduling of a distributed unit DU and scheduling of a mobile termination MT.

21. The method according to claim 19, wherein in a case of sending the first indication information to the first node, the first indication information is carried on a PDCCH, downlink control information DCI, a medium access control control element MAC CE, radio resource control RRC, or a backhaul access protocol control protocol data unit.

22. The method according to claim 21, wherein the first indication information includes a target parameter associated with the target multiplexing mode, and the target parameter comprises any one of the following: a code point of the PDCCH, a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, and frequency hopping of the demodulation reference signal DMRS of the PUCCH.

23. The method according to claim 22, wherein resource configuration of the target multiplexing mode comprises at least one of the following: a time domain location, a periodicity indication, a time domain resource indication, a frequency domain resource indication, a space domain resource indication, a rank indication, a beam indication, a transmission configuration indication, a power indication, an interference indication, and a modulation and coding scheme MCS indication.

24. The method according to claim 19, wherein after the step of receiving first indication information sent by a first node, the method further comprises:
sending, in a case that the second node does not support the target multiplexing mode, fourth indication information to the first node, wherein the fourth indication information is used for indicating to terminate the target multiplexing mode; and the second node is the donor node or the parent node of the first node.

25. The method according to claim 24, wherein each of the first indication information and the fourth indication information comprises at least one of the following: a periodicity indication, a time offset, a time domain resource indication, a frequency domain resource indication, a resource configuration type indication, a rank indication, a beam indication, a power indication, an interference indication, and a modulation and coding scheme MCS indication.

26. The method according to claim 19, further comprising:
receiving third indication information sent by the first node, wherein the third indication information is used for indicating a recommended multiplexing mode, and the recommended multiplexing mode is used for determining the target multiplexing mode.

27. The method according to claim 26, wherein the third indication information comprises at least one of the following: a sequence of a physical uplink control channel PUCCH, a cyclic offset of the PUCCH, a sequence of a demodulation reference signal DMRS of the PUCCH, a cyclic offset of the demodulation reference signal DMRS of the PUCCH, frequency hopping of the demodulation reference signal DMRS of the PUCCH, and a code point of the PUCCH.

28. The method according to claim 26, wherein in a case that the second node does not support the recommended multiplexing mode, the target multiplexing mode is a default multiplexing mode; and the second node is the donor node or the parent node of the first node.

29. The method according to claim 26, wherein the receiving third indication information sent by the first node comprises at least one of the following:
receiving, based on a first preset periodicity, the third indication information sent by the first node; and
receiving, in a case that a preset reporting condition is satisfied, the third indication information sent by the first node, wherein
the reporting condition is a predefined, preconfigured, or configured trigger condition.

30. The method according to claim 19, wherein an indication granularity associated with the target multiplexing mode comprises at least one of the following: M time units and N frequency domain units, wherein
both M and N are positive integers, the time unit is a sub-frame, a slot, a symbol, or a periodicity, and a frequency domain granularity comprises a physical resource block PRB, a sub-band, a precoding resource block group PRG, a sub-carrier, or a resource element RE.

31. A transmission processing apparatus, comprising:
a first transmission module, configured to receive first indication information sent by a second node or send first indication information to a second node, wherein the first indication information is used for indicating a target multiplexing mode of a first node, wherein
the second node is a donor node or a parent node of the first node.

32. The apparatus according to claim 31, wherein the first indication information is further used for indicating at least one of the following: scheduling of a distributed unit DU and scheduling of a mobile termination MT.

33. A transmission processing apparatus, comprising:
a second transmission module, configured to receive first indication information sent by a first node or send first indication information to a first node, wherein the first indication information is used for indicating a target multiplexing mode of the first node.

34. The apparatus according to claim 33, wherein the first indication information is further used for indicating at least one of the following: scheduling of a distributed unit DU and scheduling of a mobile termination MT.

35. A communication device, comprising: a memory, a processor, and a program stored in the memory and runnable on the processor, wherein when the program is executed by the processor, the steps in the transmission processing method according to any one of claims 1 to 18, or the steps of the transmission processing method according to any one of claims 19 to 30 are implemented.

36. A readable storage medium, wherein the readable storage medium stores a program or an instruction, wherein when the program or the instruction is executed by a processor, the steps in the transmission processing method according to any one of claims 1 to 18, or the steps of the transmission processing method according to any one of claims 19 to 30 are implemented.

37. A chip, comprising a processor and a communication interface, wherein the communication interface is coupled to the processor, and the processor is configured to run a program or an instruction to implement the steps in the transmission processing method according to any one of claims 1 to 18, or the steps of the transmission processing method according to any one of claims 19 to 30.

38. A computer program product, stored in a non-transitory storage medium, wherein the computer program product is executed by at least one processor to implement the steps in the transmission processing method according to any one of claims 1 to 18, or the steps of the transmission processing method according to any one of claims 19 to 30.
